# EUROPEAN PATENT APPLICATION

(11) **EP 4 362 521 A1**
(43) Date of publication of application: **01.05.2024**
(21) Application number: 21948781.6
(22) Date of filing: 07.07.2021
(51) Int. Cl.: H04W 12/50

(54) **METHOD FOR ESTABLISHING SECURE VEHICLE COMMUNICATION, AND VEHICLE, TERMINAL AND SYSTEM**

(71) Applicant: Huawei Technologies Co., Ltd., Shenzhen, Guangdong 518129 (CN)
(72) Inventor: GENG, Feng, Shenzhen, Guangdong 518129 (CN); LI, Yong, Shenzhen, Guangdong 518129 (CN); SHANG, Yu, Shenzhen, Guangdong 518129 (CN)
(74) Representative: Huawei European IPR
(86) International application number: PCT/CN2021/104967
(87) International publication number: WO 2023/279283

(57) **Abstract**

Embodiments of this application provide a method for establishing secure vehicle communication, a vehicle, a terminal, and a system. The vehicle may generate a ciphering parameter based on a parameter included in a first interaction parameter set sent by the terminal; then encrypt a shared key by using the ciphering parameter, to obtain a first vehicle key; and finally send a second interaction parameter set including the first vehicle key to the terminal, so that the terminal can decrypt the first vehicle key to obtain the shared key. In this way, the terminal and the vehicle can perform encryption and/or integrity protection on sent data by using the shared key.

## Description

### TECHNICAL FIELD

This application relates to the field of the Internet of Vehicles, and in particular, to a method for establishing secure vehicle communication, a vehicle, a terminal, and a system.

### BACKGROUND

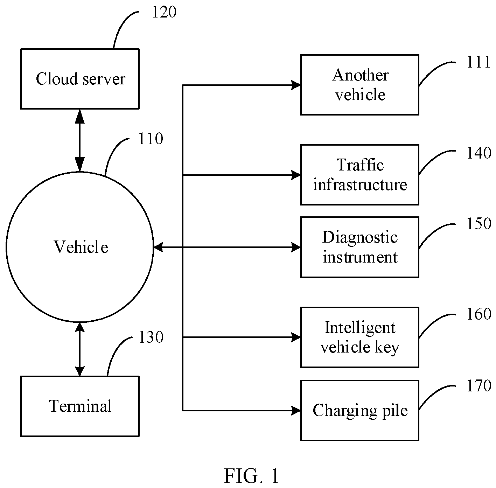

There are various scenarios in which an intelligent vehicle communicates with an application outside the vehicle. For example, as shown in FIG. 1, a vehicle 110 is a connected vehicle, and communicates with several external entities such as another vehicle 111, a cloud server 120, a terminal 130, a traffic infrastructure 140, a diagnostic instrument 150, an intelligent vehicle key 160, or a charging pile 170, to form V2X (vehicle-to-everything) communication.

Specific processes of different V2X communication are different. A process of communication between the vehicle 110 and the terminal 130 is as follows: When a distance between the terminal 130 and the vehicle 110 is less than or equal to a distance specified in short-range communication, the terminal 130 and the vehicle 110 may perform bidirectional communication by using a short-range communication medium, where the short-range communication medium may be a communication medium such as Bluetooth, RFID (Radio Frequency Identification), or NFC (Near Field Communication). When the distance between the terminal 130 and the vehicle 110 is greater than the distance specified in short-range communication, the terminal 130 may perform bidirectional communication with the vehicle 110 by using a long-range communication medium by using the cloud server 120. The long-range communication medium may be a communication medium such as a GPS (Global Positioning System) or a GSM (Global System for Mobile Communications).

When the terminal 130 communicates with the vehicle 110 by using the cloud server 120, data transmission between the terminal 130 and the vehicle 110 needs to be completed by using the cloud server 120. When a user obtains a vehicle ID from the vehicle 110 by using the terminal 130, the vehicle 110 needs to upload the vehicle ID to the cloud server 120. The cloud server 120 encrypts the vehicle ID, and sends the encrypted vehicle ID to the terminal 130. In this process, once a process of communication between the cloud server 120 and the vehicle 110 or the terminal 130 is maliciously attacked, the vehicle ID is leaked.

### SUMMARY

To resolve the problem that exists in the conventional technology, embodiments of this application provide a method for establishing secure vehicle communication, a vehicle, a terminal, and a system.

According to a first aspect, an embodiment of this application provides a method for establishing secure vehicle communication. The method is applicable to a vehicle, and includes:
receiving a first interaction parameter set, where the first interaction parameter set is a set including a parameter sent by a terminal to the vehicle when the terminal requests to perform data exchange with the vehicle;
generating a ciphering parameter set based on the parameter included in the first interaction parameter set, where the ciphering parameter set includes at least one ciphering parameter;
encrypting a shared key by using the ciphering parameter, to obtain a first vehicle key, where the shared key is a randomly generated character string; and
sending a second interaction parameter set to the terminal, where the second interaction parameter set includes at least the first vehicle key.

In this implementation, the vehicle may generate the ciphering parameter based on the parameter included in the first interaction parameter set sent by the terminal; then encrypt the shared key by using the ciphering parameter, to obtain the first vehicle key; and finally send the second interaction parameter set including the first vehicle key to the terminal, so that the terminal can decrypt the first vehicle key to obtain the shared key. In this way, the terminal and the vehicle can perform encryption and/or integrity protection on sent data by using the shared key, and security of communication between the terminal and the vehicle is relatively high.

With reference to the first aspect, in a first implementation, the first interaction parameter set includes curve parameters, a base point, and a first transfer parameter, where
the curve parameters are parameters used to uniquely determine an elliptic curve; and
the first transfer parameter is a parameter obtained by hashing the user password onto the elliptic curve and then performing point addition calculation on an elliptic parameter obtained by hashing the user password onto the elliptic curve and a first elliptic parameter, where the first elliptic parameter is a coordinate value of any point on the elliptic curve.

In this implementation, the terminal and the vehicle may perform encryption and/or integrity protection on the sent data by using the calculated shared key, and security of communication between the terminal and the vehicle is relatively high.

With reference to the first aspect, in a second implementation, the first interaction parameter set further includes a first subset, the first subset includes at least one identification parameter, and the identification parameter includes a user ID and/or a component ID.

In this implementation, the terminal and the vehicle may perform encryption and/or integrity protection on the sent data by using the calculated shared key, and security of communication between the terminal and the vehicle is relatively high.

With reference to the first aspect, in a third implementation, the second interaction parameter set further includes a second subset, the second subset includes at least one interaction parameter, and the interaction parameter is a parameter that participates in calculation of the ciphering parameter and that is not recorded in the terminal.

In this implementation, the terminal and the vehicle may perform encryption and/or integrity protection on the sent data by using the calculated shared key, and security of communication between the terminal and the vehicle is relatively high.

With reference to the first aspect, in a fourth implementation, the step of generating a ciphering parameter set based on the parameter included in the first interaction parameter set includes:
performing point subtraction calculation on the first transfer parameter and the second elliptic parameter to obtain the first elliptic parameter; and
connecting the first elliptic parameter and the second elliptic parameter to obtain a master key, where the second elliptic parameter is an elliptic parameter obtained by hashing the user password onto the elliptic curve, the user password is pre-stored in the vehicle, and the elliptic curve is a curve selected based on the curve parameters.

In this implementation, the first elliptic parameter and the second elliptic parameter are introduced in a process of calculating the master key. The second elliptic parameter is an elliptic parameter obtained by hashing the user password onto the elliptic curve, so that it can be ensured that the master key is related to the user password. The first elliptic parameter is a parameter calculated based on the first transfer parameter. Because the first transfer parameter is random and unpredictable, the first elliptic parameter is also random and unpredictable. The first elliptic parameter is introduced in a process of calculating the master key, so that randomness and unpredictability of the master key can be increased. The first vehicle key obtained through calculation by using the master key is random and unpredictable. In a process in which the terminal communicates with the vehicle by using the first vehicle key, a replay attack can be prevented, and communication security is relatively high.

With reference to the first aspect, in a fifth implementation, the step of generating a ciphering parameter set based on the parameter included in the first interaction parameter set includes:
performing point subtraction calculation on the first transfer parameter and a second elliptic parameter to obtain the first elliptic parameter, where the second elliptic parameter is an elliptic parameter obtained by hashing the user password onto the elliptic curve, the user password is pre-stored in the vehicle, and the elliptic curve is a curve selected based on the curve parameters;
performing multiplication calculation on the first elliptic parameter and a random parameter to obtain a third elliptic parameter, where the random parameter is a randomly generated parameter; and
connecting the third elliptic parameter and the second elliptic parameter to obtain a master key.

In this implementation, the first elliptic parameter, the second elliptic parameter, and the random parameter are introduced in a process of calculating the master key. The second elliptic parameter is an elliptic parameter obtained by hashing the user password onto the elliptic curve, so that it can be ensured that the master key is related to the user password. The first elliptic parameter is a parameter calculated based on the first transfer parameter. Because the first transfer parameter is random and unpredictable, the first elliptic parameter is also random and unpredictable. The random parameter is also random and unpredictable. The first elliptic parameter and the random parameter are introduced in a process of calculating the master key, so that randomness and unpredictability of the master key can be increased. The first vehicle key obtained through calculation by using the master key is random and unpredictable. In a process in which the terminal communicates with the vehicle by using the first vehicle key, a replay attack can be prevented, and communication security is relatively high.

With reference to the first aspect, in a sixth implementation, the step of generating a ciphering parameter set based on the parameter included in the first interaction parameter set further includes:
calculating an intermediate parameter based on the identification parameter and/or the vehicle ID and/or the first transfer parameter and/or a second transfer parameter, where the vehicle ID is pre-stored in the vehicle, and the second transfer parameter is a parameter calculated based on the parameter in the first interaction parameter set.

In this implementation, a parameter participating in intermediate parameter calculation may be flexibly selected based on a requirement, to implement a flexible encryption process.

With reference to the first aspect, in a seventh implementation, a process of calculating the second transfer parameter is:
selecting the elliptic curve based on the curve parameters;
hashing the user password onto the elliptic curve to obtain the second elliptic parameter; and performing point addition calculation on the second elliptic parameter and a fourth elliptic parameter to obtain the second transfer parameter, where the fourth elliptic parameter is a coordinate value corresponding to any point on the elliptic curve.

In this implementation, the fourth elliptic parameter is introduced in a process of calculating the second transfer parameter. The fourth elliptic parameter is the coordinate value corresponding to any point on the elliptic curve. Therefore, the fourth elliptic parameter is random. The fourth elliptic parameter is introduced in the process of calculating the second transfer parameter, so that the second transfer parameter is random and unpredictable.

With reference to the first aspect, in an eighth implementation, the step of generating a ciphering parameter set based on the parameter included in the first interaction parameter set further includes:
encrypting the master key by using the intermediate parameter to obtain an encryption key.

In this implementation, the vehicle performs secondary encryption on the master key by using the intermediate parameter, to obtain the encryption key. Because the intermediate parameter is random and unpredictable, it can be ensured that the obtained encryption key is random and unpredictable. Further, even if a communication process between the terminal and the vehicle is maliciously attacked, a key that is first attacked is the encryption key. Therefore, the encryption key protects the master key to some extent.

With reference to the first aspect, in a ninth implementation, the step of calculating an intermediate parameter based on the identification parameter and/or the vehicle ID and/or the first transfer parameter and/or the second transfer parameter is specifically:
connecting the user ID and the component ID to obtain the intermediate parameter.

In this implementation, the user ID and the component ID are introduced in a process of calculating the intermediate parameter. The user ID may implement a function of uniquely identifying the terminal, to further ensure that the generated intermediate parameter is related to the terminal. The component ID may implement a function of uniquely identifying an ECU. Therefore, different intermediate parameters may be generated for each ECU, and the intermediate parameters participate in calculation of the first vehicle key. Therefore, different first vehicle keys may be generated for different ECUs. In a process in which the terminal communicates with the vehicle by using the first vehicle key, communication security is relatively high.

With reference to the first aspect, in a tenth implementation, the step of calculating an intermediate parameter based on the identification parameter and/or the vehicle ID and/or the first transfer parameter and/or the second transfer parameter is specifically:
connecting the user ID, the component ID, and the first transfer parameter to obtain the intermediate parameter.

In this implementation, the first transfer parameter and the component ID are introduced in a process of calculating the intermediate parameter. The component ID may implement a function of uniquely identifying an ECU, and different intermediate parameters may be generated for different ECUs. The first transfer parameter is random and untestable. Therefore, the intermediate parameter calculated based on the first transfer parameter is also random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

With reference to the first aspect, in an eleventh implementation, the step of calculating an intermediate parameter based on the identification parameter and/or the vehicle ID and/or the first transfer parameter and/or the second transfer parameter is specifically:
connecting the user ID, the component ID, the first transfer parameter, and the second transfer parameter to obtain the intermediate parameter.

In this implementation, the user ID, the component ID, the first transfer parameter, and the second transfer parameter are introduced in a process of calculating the intermediate parameter. The component ID may implement a function of uniquely identifying an ECU. Therefore, different intermediate parameters may be generated for different ECUs. In addition, the user ID may implement a function of uniquely identifying the terminal, so that the generated intermediate parameter corresponds to the terminal. Further, the first transfer parameter and the second transfer parameter are random and unpredictable. Therefore, the generated intermediate parameter is random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

With reference to the first aspect, in a twelfth implementation, the step of calculating an intermediate parameter based on the identification parameter and/or the vehicle ID and/or the first transfer parameter and/or the second transfer parameter is specifically:
connecting the user ID, the component ID, the vehicle ID, the first transfer parameter, and the second transfer parameter to obtain the intermediate parameter.

In this implementation, the user ID, the component ID, the vehicle ID, the first transfer parameter, and the second transfer parameter are introduced in a process of calculating the intermediate parameter. The component ID may implement a function of uniquely identifying an ECU. Therefore, different intermediate parameters may be generated for different ECUs. In addition, the user ID may implement a function of uniquely identifying the terminal, so that the generated intermediate parameter corresponds to the terminal. The vehicle ID may implement a function of uniquely identifying the vehicle, so that the generated intermediate parameter corresponds to the vehicle. Further, the first transfer parameter and the second transfer parameter are random and unpredictable. Therefore, the generated intermediate parameter is random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

With reference to the first aspect, in a thirteenth implementation, the step of calculating an intermediate parameter based on the identification parameter and/or the vehicle ID and/or the first transfer parameter and/or the second transfer parameter is specifically:
connecting the vehicle ID and the second transfer parameter to obtain the intermediate parameter.

In this implementation, the second transfer parameter and the vehicle ID are introduced in a process of calculating the intermediate parameter. The vehicle ID may implement a function of uniquely identifying the vehicle, so that the generated intermediate parameter can be related to the vehicle. The second transfer parameter is random and unpredictable. Therefore, the generated intermediate parameter is random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

According to a second aspect, an embodiment of this application provides a method for establishing secure vehicle communication. The method is applicable to a terminal and includes:
receiving a second interaction parameter set, where the second interaction parameter set includes at least the first vehicle key;
decrypting the first vehicle key to obtain a ciphering parameter and a shared key;
encrypting the shared key by using the ciphering parameter, to obtain a second vehicle key, or generating the second vehicle key by using the ciphering parameter; and
sending the second vehicle key to the vehicle.

In this implementation, the terminal may decrypt the first vehicle key sent by the vehicle, to obtain the ciphering parameter and the shared key; then encrypt the shared key by using the ciphering parameter, to obtain the second vehicle key, and finally send the second vehicle key to the vehicle, so that the vehicle can decrypt the second vehicle key by using the ciphering parameter stored in the vehicle, to obtain the shared key and/or the ciphering parameter. The vehicle may compare the shared key and/or the ciphering parameter obtained by decrypting the second vehicle key with the shared key and/or the ciphering parameter stored in the vehicle. If the two are consistent, decryption succeeds. When the decryption succeeds, the terminal and the vehicle may perform encryption and/or integrity protection on the sent data by using the shared key.

According to a third aspect, an embodiment of this application provides a vehicle, including a key management system, where the key management system includes:
a processor and a memory configured to store executable instructions of the processor, where
the processor is configured to implement the method provided in the first aspect when executing the instructions.

According to a fourth aspect, an embodiment of this application provides a terminal, including:
a processor and a memory configured to store executable instructions of the processor, where
the processor is configured to implement the method provided in the second aspect when executing the instructions.

According to a fifth aspect, an embodiment of this application provides a secure communication system, including:
a vehicle, where the vehicle is configured to implement the method provided in the first aspect when executing instructions; and
a terminal, where the terminal is configured to implement the method provided in the second aspect when executing instructions.

According to a sixth aspect, an embodiment of this application provides a secure communication system, including:
a first application installed on a vehicle end, where the first application is configured to implement the method provided in the first aspect when executing instructions; and
a second application installed on a terminal, where the second application is configured to implement the method provided in the second aspect when executing instructions.

According to a seventh aspect, an embodiment of this application provides a non-volatile computer-readable storage medium, storing a computer program instruction, where when the computer program instruction is executed by a processor, the method provided in the first aspect or the method provided in the second aspect is implemented.

According to an eighth aspect, an embodiment of this application provides a computer program product, where when the computer program product runs on a computer, the computer is enabled to perform the method provided in the first aspect, or perform the method provided in the second aspect.

### BRIEF DESCRIPTION OF DRAWINGS

FIG. 1 is a diagram of a scenario in which an intelligent vehicle communicates with an external entity;
FIG. 2 is a schematic diagram of a network architecture to which this application is applicable;
FIG. 3 is a conceptual diagram of a technical solution according to this application;
FIG. 4 is a structural block diagram of a KMS according to this embodiment;
FIG. 5 is a flowchart of a method for establishing secure vehicle communication according to this embodiment;
FIG. 6 is a schematic diagram of an elliptic curve;
FIG. 7 is a flowchart of a ciphering parameter generation method according to a feasible embodiment;
FIG. 8 is a flowchart of a ciphering parameter generation method according to a feasible embodiment;
FIG. 9 is a flowchart of a ciphering parameter generation method according to a feasible embodiment;
FIG. 10 is a flowchart of a second transfer parameter generation method according to a feasible embodiment;
FIG. 11 is a flowchart of a method for establishing secure vehicle communication according to this embodiment;
FIG. 12 is a structural block diagram of a system for establishing secure vehicle communication according to this embodiment; and
FIG. 13 is a flowchart of interaction between a terminal and a vehicle according to a feasible embodiment.

### DESCRIPTION OF EMBODIMENTS

The following describes, with reference to specific embodiments, a method, a vehicle, a terminal, and a system provided in this application.

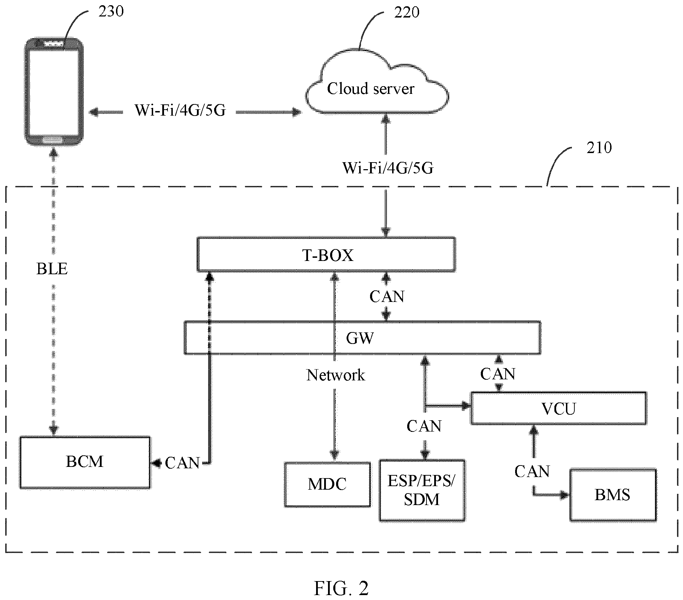

FIG. 2 is a schematic diagram of a network architecture to which this application is applicable. The network architecture includes a vehicle 210, a cloud server 220, and a terminal 230.

In this application, the vehicle 210 is equipped with an ECU (Electronic Control Unit, ) and a communication apparatus. The ECU may communicate with the terminal 230 or the cloud server 220 by using the communication apparatus. The ECU may be but is not limited to a VCU (Vehicle Control Unit), an MDC (Mobile Data Center), a BCM (Body Control Module), a BMS (Battery Management System), an ESP (Electronic Stability Program), an EPS (Electronic Power Steering), and an SDM (Supplemental Restraint System Diagnostic Module), and the like. ECUs may communicate with each other by using a CAN (Controller Area Network,). The communication apparatus is a component configured to communicate with an external device or an external server based on various communication protocol types. The communication apparatus may include at least one of a Wi-Fi chip, a BLE (Bluetooth Low Energy, Bluetooth) communication protocol chip, another network communication protocol chip such as a wired Ethernet communication protocol chip or a near field communication protocol chip, and an infrared receiver. For example, when a distance between the vehicle and the terminal is less than a preset distance, the vehicle 210 and the terminal 230 may perform bidirectional communication by using a short-range communication apparatus. The short-range communication medium communication apparatus may be a communication medium communication apparatus such as Bluetooth, RFID (Radio Frequency Identification), or NFC (Near Field Communication,). The terminal 230 and the cloud server 220 may communicate with each other by using a remote communication apparatus. The remote communication apparatus may include an apparatus such as a T-Box (Telematics Box, front-mounted intelligent gateway) or a GW (GateWay, in-vehicle gateway) that is integrated in the vehicle. In this application, the vehicle supports one or more wireless communication technologies, such as Wi-Fi (wireless fidelity), LTE (long term evolution), 5G (5th Generation Mobile Communication Technology), and 4G (4th Generation Mobile Communication Technology).

In this application, the cloud server 220 is an Internet of Vehicles management platform deployed on a cloud. The cloud server 220 may communicate with the vehicle 210/terminal 230 by using a communication network. The communication network may usually include an access device and a network device. Types of the access device and the network device are not limited in this application. The access device may be specifically a device such as a base station of an evolved universal E-UTRAN (Evolved Universal Terrestrial Radio Access Network, terrestrial radio access network) or a base station of a 5G network. The network device may be specifically a 4G CN (core network) device or network element, or may be a 5G CN device or network element. The cloud server 220 is a trusted server for the vehicle 210/terminal 230, and the vehicle 210/terminal 230 may establish a secure communication channel with the cloud server 220. As the Internet of Vehicles management platform, the cloud server 220 may further connect to or manage the vehicle 210/the terminal 230. In a manner such as pre-configuration or negotiation, a secure communication channel or a secure connection may be established between the cloud server 220 and the terminal 230 to perform secure communication. The cloud server 220 is used as a vehicle/terminal management platform. The vehicle and the terminal sign up or register with the cloud server 220. The cloud server 220 stores sign-up or registration information of the vehicle/terminal, where the sign-up or registration information may include long-term valid identity information and security information of the vehicle, such as a vehicle license plate number, a VIN (Vehicle identification number), a PSK (Pre-Shared Key), and a PSKID (Pre-Shared Key identification, pre-shared key identifier), and may further include long-term valid identity information and security information of the terminal, for example, an account of the terminal and an identification number of the terminal.

In this application, the terminal 230 may be a handheld device having a wireless connection function, or a processing device connected to a wireless modem. For example, the terminal 230 may be a mobile phone, a computer, a tablet computer, a PDA (personal digital assistant), a MID (mobile Internet device), a wearable device, and an ebook reader; or may be a portable, pocket-sized, handheld, or computer built-in mobile device. Specifically, the terminal 230 may perform bidirectional communication with the vehicle 210 or the cloud server 220 by using the built-in or integrated communication apparatus. In this application, when the distance between the terminal and the vehicle is less than the preset distance, the terminal may directly communicate with the vehicle by using the short-range communication apparatus integrated in the terminal. For example, when the distance between the terminal and the vehicle is less than the preset distance, the terminal may send, to the vehicle by using a Bluetooth module integrated in the terminal, a vehicle door/window opening instruction, identity authentication information, an automatic parking control instruction, a vehicle finding instruction, or a charging gun unlocking instruction. When the distance between the terminal and the vehicle is greater than the preset distance, the terminal may communicate with the vehicle by using the cloud server. For example, the terminal may transmit a vehicle status query instruction, a vehicle control instruction, or a vehicle status query instruction to the cloud server 220 by using a full communication channel between the terminal and the cloud server, and then the cloud server transmits the instruction to the target vehicle by using the full communication channel between the cloud server and the vehicle.

Either in an application scenario in which the terminal directly communicates with the vehicle by using the communication apparatus integrated in the terminal or in an application scenario in which the terminal communicates with the vehicle by using the cloud server, the information or instructions sent by the terminal to the vehicle are quite important. The target vehicle needs to accurately obtain the information or instructions, which cannot be maliciously intercepted by another vehicle or user. Therefore, in consideration of secure communication, security processing such as encryption or integrity protection needs to be performed on information or an instruction transmitted between the terminal and the vehicle, between the terminal and the cloud server, and between the cloud server and the vehicle. However, in actual network deployment, the cloud server is vulnerable to a malicious attack, causing leakage of information such as data or a control instruction in a communication process. Therefore, how the terminal performs secure communication with the vehicle is a technical problem to be resolved in this embodiment.

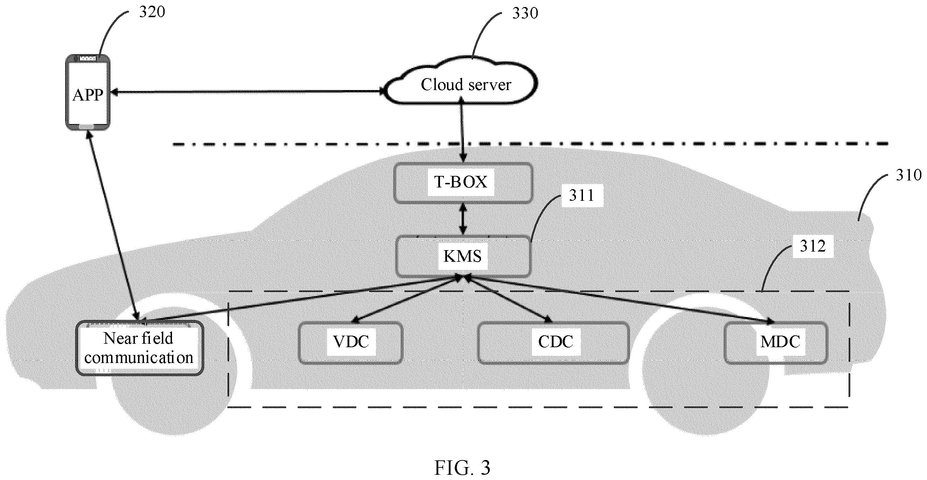

FIG. 3 shows a concept of a technical solution according to this application.

In this application, a KMS (Key Management System) 311 and one or more ECUs 312, for example, a VDC, a CDC, or an MDC, are disposed inside a vehicle 310. In this example, the KMS may distribute a shared key to the ECU 312 and a terminal 320 in a key generation manner, to implement secure communication between the terminal 320 and the ECU 312.

In this application, the shared key is used in the inside of the vehicle and the outside of the vehicle. Use in the inside of the vehicle may include use in a single ECU 312 inside the vehicle. For example, the shared key may be used for secure boot of the ECU, ECU flashing, configuration file protection, and software/hardware IP protection. When the shared key is used in a plurality of ECUs, the shared key may be used for identity authentication, secure communication, and the like between the ECUs. The shared key may also be used in the outside of the vehicle. Use in the outside of the vehicle may include use for identity authentication and access control of the vehicle, and performing various communication with an external device (for example, the terminal 320 or a cloud server 330).

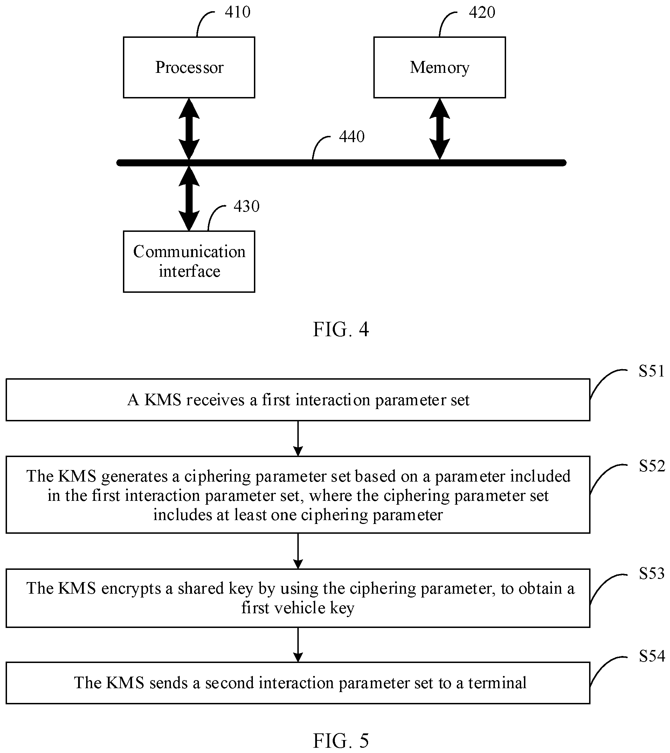

FIG. 4 shows a KMS according to this embodiment. The KMS may be a chip system. In this embodiment, the chip system may include a chip, or may include a chip and another discrete device.

The KMS includes at least one processor 410, configured to implement the method provided in this embodiment. For example, the processor 410 may generate and send information such as a vehicle key and a transfer parameter. For details, refer to detailed descriptions in the method examples. Details are not described herein.

In this embodiment, the processor 410 may be a general-purpose processor, a digital information processor, an application-specific integrated circuit, a field programmable gate array or another programmable logic device, a discrete gate or transistor logic device, or a discrete hardware component, and may implement or perform the methods, steps, and logic block diagrams disclosed in this embodiment. The general-purpose processor may be a microprocessor, any conventional processor, or the like. The steps of the methods disclosed with reference to this embodiment may be directly performed by a hardware processor, or may be performed by a combination of hardware and software modules in the processor.

The KMS may further include at least one memory 420, configured to store program instructions and/or data. The memory 420 is coupled to the processor 410. Coupling in this embodiment is indirect coupling or a communication connection between apparatuses, units, or modules, may be in an electrical form, a mechanical form, or another form, and is used for information exchange between the apparatuses, the units, or the modules. The processor 410 may collaboratively operate with the memory 420. The processor 410 may execute the program instructions stored in the memory 420.

In this embodiment, the memory 420 may be a non-volatile memory, for example, an HDD (hard disk drive) or an SSD (solid-state drive), or may be a volatile memory, for example, a RAM (random-access memory). The memory is any other medium that can carry or store expected program code in a form of an instruction or a data structure and that can be accessed by a computer, but is not limited thereto. The memory in this embodiment may alternatively be a circuit or any other apparatus that can implement a storage function, and is configured to store program instructions and/or data.

The KMS may further include a communication interface 430, configured to communicate with another device by using a transmission medium, so that the vehicle communicates with the another device. For example, the another device may be a terminal. The processor 410 receives and sends data by using the communication interface 430, and is configured to implement the methods recorded in the embodiments corresponding to FIG. 5 to FIG. 9.

In this embodiment, a specific connection medium between the communication interface 430, the processor 410, and the memory 420 is not limited.

In this embodiment, in FIG. 4, the memory 420, the processor 410, and the communication interface 430 are connected by using a bus 440. The bus 440 is represented by using a thick line in FIG. 4. A connection manner between other components is merely an example for description, and is not limited. The bus may be classified into an address bus, a data bus, a control bus, and the like. For ease of representation, only one thick line is used to represent the bus in FIG. 3, but this does not indicate that there is only one bus or only one type of bus.

With reference to FIG. 5, the following specifically explains a procedure of steps of establishing secure vehicle communication by the KMS according to an embodiment of this application.

In S51, the KMS receives a first interaction parameter set.

In this embodiment, the first interaction parameter set is a set including parameters sent by a terminal to a vehicle when the terminal requests to perform data exchange with the vehicle. The first interaction parameter set may include curve parameters, a base point, and a first transfer parameter.

In this embodiment, the curve parameters are parameters used to uniquely determine an elliptic curve, where the elliptic curve is a set (x, y) of points that meet y²=x³+ax+b and meet 4a³+27b²≠0. The following curve parameters are used to determine an elliptic curve: T=(a, b). Before requesting to perform data exchange with the vehicle, the terminal selects the elliptic curve in advance. Once the elliptic curve is selected, curve parameters a and b are determined. In an optional solution, the terminal may randomly select an elliptic curve each time before requesting to perform data exchange with the vehicle. The elliptic curve is used only in current data exchange between the terminal and the vehicle. Therefore, even if a current data exchange process is maliciously attacked, a next data exchange process is not affected, thereby preventing a replay attack.

In this embodiment, the base point is a valid point on the elliptic curve, and may be denoted as P. To be specific, an order of the base point is calculated on the elliptic curve by using a method of calculating an order of group. If the obtained order is an integer, the base point is valid. This embodiment does not limit a manner of selecting the base point, and a common manner of selecting the base point in this field may be used. For example, the base point may be selected in the following manner: First, a value x1 is randomly selected, where x1 is any value, and then the value x1 is used to determine whether the elliptic curve has a solution. If the elliptic curve has a solution, y1 is solved, and then y 1 is substituted into the elliptic curve to obtain x2. In this case, coordinates of the base point are (x2, y1).

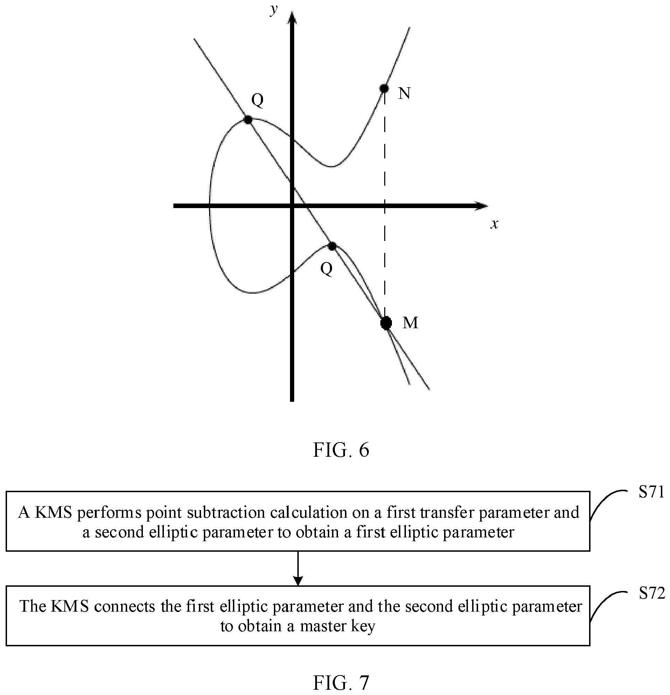

In this embodiment, the first transfer parameter is a parameter obtained by hashing a user password onto the elliptic curve and then performing point addition calculation on an elliptic parameter obtained by hashing the user password onto the elliptic curve and a first elliptic parameter, and may be denoted as C1. The first elliptic parameter is a coordinate value of any point on the elliptic curve, the first elliptic parameter may be denoted as X, and X is random and unpredictable. A result of the point addition calculation is that a connection line between two points on the elliptic curve is extended to obtain an extension line, and coordinates corresponding to a point on the elliptic curve are obtained by flipping an intersection point between the extension line and the elliptic curve about an X axis. The following describes a point addition calculation process with reference to a specific accompanying drawing. FIG. 6 is a schematic diagram of an elliptic curve. In the figure, there are two points Q and L on the elliptic curve. An intersection point between an extension line of a connection line between Q and L and the elliptic curve is a point M, and coordinates that correspond to a point N on the elliptic curve and that are obtained by flipping M about the X axis are a point addition calculation result of Q and L. A manner of generating the first transfer parameter may be as follows: A point x is randomly selected on the elliptic curve selected by the terminal, and the first elliptic parameter X is generated according to the following formula: X=x∘P; and the terminal hashes the PW (Password) onto the selected elliptic curve to obtain the HashtoPoint (PW). "∘" represents point multiplication calculation of the elliptic curve. By performing point multiplication calculation on any value and the base point, any value may be converted into coordinates of a corresponding point on the elliptic curve. The PW is a piece of fixed information specified by a user. Because X is random and unpredictable, C1 calculated based on X is also random and unpredictable. In addition, C1 calculated based on HashtoPoint (PW) is related to the PW.

In a feasible implementation, the first interaction parameter set further includes a first subset, where the first subset includes at least one identification parameter.

In this embodiment, the identification parameter is a parameter that implements a function of uniquely identifying a component or a device. For example, the identification parameter may be a user ID that implements a function of uniquely identifying the terminal.

In S52, the KMS generates a ciphering parameter set based on the parameter included in the first interaction parameter set, where the ciphering parameter set includes at least one ciphering parameter.

There are a plurality of implementations of generating the ciphering parameter. The following describes, by using specific examples, the manners of generating the ciphering parameter.

FIG. 7 is a flowchart of a ciphering parameter generation method according to a feasible embodiment. The KMS is configured to perform the following steps.

In S71, the KMS performs point subtraction calculation on the first transfer parameter and the second elliptic parameter to obtain the first elliptic parameter.

In this embodiment, the first elliptic parameter may be denoted as X, and X may be calculated by using the following formula: X=C1-HashtoPoint (PW). HashtoPoint (PW) is the second elliptic parameter.

In this embodiment, HashtoPoint (PW) is an elliptic parameter obtained by hashing the PW onto the elliptic curve.

In this embodiment, the PW is a piece of fixed information specified by the user, and is used to determine a terminal access right and calculate the ciphering parameter. Because the user password is a piece of fixed information, if the user password is cracked once, there is a possibility that a replay attack may exist in data in a process of exchanging data between the terminal and the vehicle. Therefore, in the solution shown in this embodiment, the user password is pre-stored in the KMS of the vehicle, and in a key agreement process, the user password may not be transmitted between the KMS and the terminal as plaintext.

A process of storing the user password in the KMS may be as follows: When the terminal is bound to the vehicle for the first time, the terminal registers a user account number, where the user account number is used to bind a correspondence between the vehicle and the terminal. A process of registering the user account number may be: transmitting, by the terminal, registration information to the KMS by using a short-range communication medium. In this embodiment, the registration information includes at least the user ID and the PW. The KMS stores the received registration information. Each time the terminal attempts to communicate with the vehicle, the terminal transmits the user ID to the KMS of the vehicle. Then, the KMS invokes the corresponding PW based on a correspondence between the user ID and the PW.

In this embodiment, a time at which the terminal transmits the user ID is not limited. In a feasible implementation, each time the terminal attempts to communicate with the vehicle, the terminal may transmit the user ID to the KMS in advance. The KMS authenticates the received user ID. If authentication succeeds, the KMS outputs a piece of feedback information to the terminal. After receiving the feedback information of the KMS, the terminal may perform an action of sending the first interaction parameter set. The authentication process may include but is not limited to: The KMS determines whether the received user ID is pre-stored in an internal memory of the KMS, and if the user ID is pre-stored in the internal memory of the KMS, the authentication succeeds; or if the user ID is not pre-stored in the internal memory of the KMS, the authentication fails. In a feasible implementation, the terminal may transmit the user ID as a parameter to the KMS together with the curve parameters, P, and C1. It should be noted that this embodiment merely describes, by using examples, two types of time at which the terminal transmits the user ID, and the foregoing transmission time does not constitute a limitation. In an actual application process, the time at which the terminal transmits the user ID may be but is not limited to the foregoing two implementations.

In S72, the KMS connects the first elliptic parameter and the second elliptic parameter to obtain a master key.

In this embodiment, the master key may be denoted as MK, and MK may be calculated by using the following formula: MK=X∥HashtoPoint (PW).

In the technical solution shown in this embodiment, the first elliptic parameter and the second elliptic parameter are introduced in a process of calculating the master key. The second elliptic parameter is an elliptic parameter obtained by hashing the user password onto the elliptic curve, so that it can be ensured that the master key is related to the user password. The first elliptic parameter is a parameter calculated based on the first transfer parameter. Because the first transfer parameter is random and unpredictable, the first elliptic parameter is also random and unpredictable. The first elliptic parameter is introduced in a process of calculating the master key, so that randomness and unpredictability of the master key can be increased. The first vehicle key obtained through calculation by using the master key is random and unpredictable. In a process in which the terminal communicates with the vehicle by using the first vehicle key, a replay attack can be prevented, and communication security is relatively high.

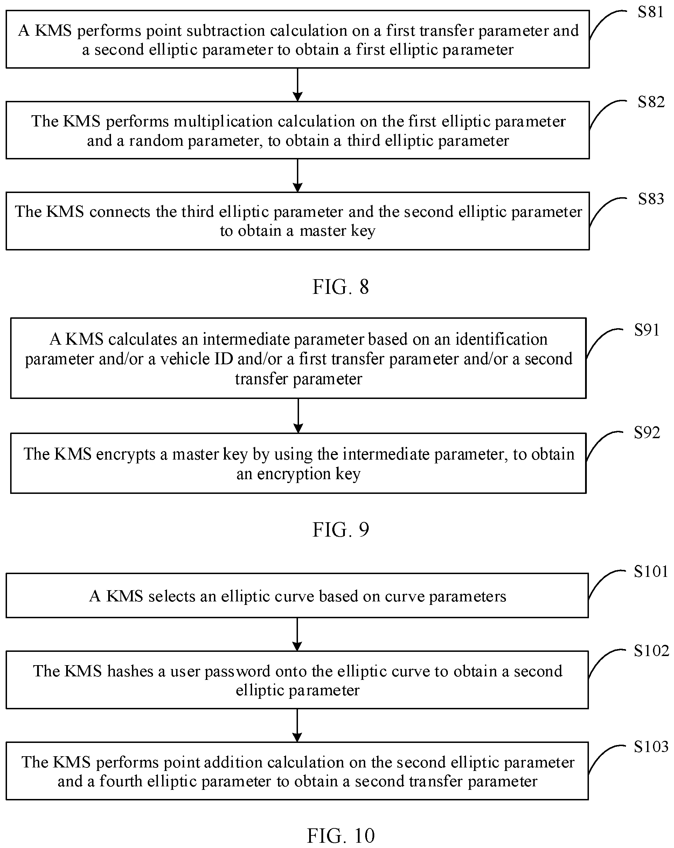

FIG. 8 is a flowchart of a ciphering parameter generation method according to a feasible embodiment. As shown in FIG. 7, the KMS is further configured to perform the following steps.

In S81, point subtraction calculation is performed on the first transfer parameter and the second elliptic parameter to obtain the first elliptic parameter.

In this embodiment, the first elliptic parameter may be denoted as X, and X may be calculated by using the following formula: X=C1-HashtoPoint (PW).

In S82, multiplication calculation is performed on the first elliptic parameter and a random parameter, to obtain a third elliptic parameter.

In this embodiment, the KMS may calculate the third elliptic parameter by using the following formula: the third elliptic parameter=X∘y, where y is the random parameter. In this embodiment, y is a randomly generated character string, and y is random and unpredictable.

In S83, the KMS connects the third elliptic parameter and the second elliptic parameter to obtain a master key.

In this embodiment, MK may be calculated by using the following formula: MK=X∘y||HashtoPoint (PW).

In the technical solution shown in this embodiment, the first elliptic parameter, the second elliptic parameter, and the random parameter are introduced in a process of calculating the master key. The second elliptic parameter is an elliptic parameter obtained by hashing the user password onto the elliptic curve, so that it can be ensured that the master key is related to the user password. The first elliptic parameter is a parameter calculated based on the first transfer parameter. Because the first transfer parameter is random and unpredictable, the first elliptic parameter is also random and unpredictable. The random parameter is also random and unpredictable. The first elliptic parameter and the random parameter are both introduced in a process of calculating the master key, so that randomness and unpredictability of the master key can be further increased. The first vehicle key obtained through calculation by using the master key is random and unpredictable. In a process in which the terminal communicates with the vehicle by using the first vehicle key, a replay attack can be prevented, and communication security is relatively high.

To further improve security of communication between the terminal and the vehicle, a feasible embodiment of this application provides a ciphering parameter generation method. As shown in FIG. 9, based on the ciphering parameter generation method provided in FIG. 7 or FIG. 8, the KMS is further configured to perform the following steps.

In S91, the KMS calculates an intermediate parameter based on the identification parameter and/or the vehicle ID and/or the first transfer parameter and/or the second transfer parameter.

There are a plurality of implementations of calculating the intermediate parameter based on the identification parameter and/or the vehicle ID and/or the first transfer parameter and/or the second transfer parameter.

In a feasible implementation, the identification parameter may include the user ID and a component ID, and the KMS may connect the user ID and the component ID to obtain the intermediate parameter.

In this embodiment, the user ID is a parameter that can uniquely identify the terminal. In this embodiment, a style of the user ID is not limited. Any identifier that can implement a function of uniquely identifying the terminal may be used as the user ID in this embodiment. As an example, the user ID may be a random character string allocated by the KMS to the terminal when the terminal registers an account for the first time. The user ID may alternatively be, but is not limited to, a device ID of the terminal.

In this embodiment, the component ID is a parameter that can uniquely identify the ECU. In this embodiment, a style of the component ID is not limited. Any identifier that can implement a function of uniquely identifying the ECU may be used as the component ID in this embodiment. As an example, the component ID may be an ECU name allocated by a manufacturer to each ECU in a process of manufacturing the vehicle, for example, a VDC, a CDC, or an MDC.

In this implementation, the first interaction parameter set sent by the terminal may include: {the curve parameters, P, C1, the user ID, and the component ID}.

In this implementation, the intermediate parameter may be denoted as W, and W may be calculated by using the following formula: W=user ID∥component ID.

In this implementation, the user ID and the component ID are introduced in a process of calculating the intermediate parameter. The user ID may implement a function of uniquely identifying the terminal, to further ensure that the generated intermediate parameter is related to the terminal. The component ID may implement a function of uniquely identifying an ECU. Therefore, different intermediate parameters may be generated for each ECU, and the intermediate parameters participate in calculation of the first vehicle key. Therefore, different first vehicle keys may be generated for different ECUs. In a process in which the terminal communicates with the vehicle by using the first vehicle key, communication security is relatively high.

In a feasible implementation, the KMS may connect the user ID and the first transfer parameter to obtain the intermediate parameter.

In this implementation, the first interaction parameter set sent by the terminal may include: {the curve parameters, P, C1, and the user ID}.

In this implementation, the intermediate parameter may be calculated in the following manner: W=user ID∥C1.

In this implementation, the user ID and the first transfer parameter are introduced in a process of calculating the intermediate parameter. The user ID may implement a function of uniquely identifying the terminal, to further ensure that the generated intermediate parameter is related to the terminal. The first transfer parameter is random and unpredictable. Therefore, the intermediate parameter calculated based on the first transfer parameter is also random and unpredictable, and the first vehicle key calculated by using the intermediate parameter is random and unpredictable. In a process in which the terminal communicates with the vehicle by using the first vehicle key, a replay attack can be prevented, and communication security is relatively high.

In a feasible implementation, the KMS may connect the user ID, the component ID, and the first transfer parameter to obtain the intermediate parameter.

In this implementation, the first interaction parameter set sent by the terminal may include: {the curve parameters, P, C1, the user ID, and the component ID}.

In this implementation, the intermediate parameter may be calculated in the following manner: W=user ID∥component ID∥C1.

In this implementation, the first transfer parameter, the component ID, and the user ID are introduced in a process of calculating the intermediate parameter. The user ID may implement a function of uniquely identifying the terminal, and may ensure that the generated intermediate parameter is related to the terminal. The component ID may implement a function of uniquely identifying an ECU, and different intermediate parameters may be generated for different ECUs. The first transfer parameter is random and untestable. Therefore, the intermediate parameter calculated based on the first transfer parameter is also random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

To generate the intermediate parameter corresponding to the vehicle, after obtaining the first interaction parameter set, the KMS may generate the intermediate parameter of the vehicle jointly based on the vehicle ID stored in the KMS. In this embodiment, the vehicle ID is information that can uniquely identify the vehicle. As an example, the vehicle ID may be a unique identifier allocated by a manufacturer to the vehicle in a process of manufacturing the vehicle. For example, the vehicle ID may further include but is not limited to vehicle identification code.

In a feasible implementation, the KMS may connect the vehicle ID and the first transfer parameter to obtain the intermediate parameter.

In this implementation, the first interaction parameter set sent by the terminal may include {the curve parameters, P, and C1}.

In this implementation, the intermediate parameter may be calculated in the following manner: W=vehicle ID||C1.

In this implementation, the first transfer parameter and the vehicle ID are introduced in a process of calculating the intermediate parameter. The first transfer parameter is random and unpredictable, and the vehicle ID may implement a function of uniquely identifying the vehicle. Therefore, the generated intermediate parameter is random and unpredictable, and the intermediate parameter corresponds to the vehicle. The first vehicle key obtained through calculation by using the intermediate parameter is random and unpredictable. In a process in which the terminal communicates with the vehicle by using the first vehicle key, a replay attack can be prevented, and communication security is relatively high.

To further improve randomness and unpredictability of the intermediate parameter, after obtaining the first interaction parameter set, the KMS may generate the intermediate parameter of the vehicle jointly based on the calculated second transfer parameter.

In this embodiment, the second transfer parameter is a parameter calculated by the KMS based on the first transfer parameter, and is random and unpredictable. FIG. 10 is a flowchart of a second transfer parameter generation method according to a feasible embodiment. The KMS performs the following steps. In S101, the KMS selects the elliptic curve based on the curve parameters. In this embodiment, the first interaction parameter set may include {the curve parameters, P, and C1}. After receiving {the curve parameters, P, and C1}, the KMS selects the corresponding elliptic curve by using the curve parameters. In S102, the KMS hashes the user password onto the elliptic curve to obtain the second elliptic parameter. In this embodiment, the user password is pre-stored in the KMS; and the KMS hashes the user password onto the elliptic curve to obtain the second elliptic parameter HashtoPoint (PW). In S103, the KMS performs point addition calculation on the second elliptic parameter and a fourth elliptic parameter to obtain the second transfer parameter. In this embodiment, the fourth elliptic parameter is a coordinate value corresponding to any point on the elliptic curve, and may be denoted as Y A process of generating Y may be as follows: The KMS selects a random number y, and then calculates Y according to the following formula: Y=y∘P. In this embodiment, the second transfer parameter may be denoted as C2: C2=HashtoPoint (PW)+Y. The fourth elliptic parameter is introduced in a process of calculating the second transfer parameter. The fourth elliptic parameter is the coordinate value corresponding to any point on the elliptic curve. Therefore, the fourth elliptic parameter is random. The fourth elliptic parameter is introduced in the process of calculating the second transfer parameter, so that the second transfer parameter is random and unpredictable.

In a feasible implementation, the KMS may connect the vehicle ID and the second transfer parameter to obtain the intermediate parameter.

In this implementation, the intermediate parameter may be calculated in the following manner: W=vehicle ID∥C2.

In this implementation, the second transfer parameter and the vehicle ID are introduced in a process of calculating the intermediate parameter. The vehicle ID may implement a function of uniquely identifying the vehicle, so that the generated intermediate parameter can be related to the vehicle. The second transfer parameter is random and unpredictable. Therefore, the generated intermediate parameter is random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

In a feasible implementation, the user ID, the component ID, the first transfer parameter, and the second transfer parameter are connected to obtain the intermediate parameter.

In this implementation, the first interaction parameter set sent by the terminal may include {the curve parameters, the user ID, the component ID, P, and C1}.

In this implementation, the intermediate parameter may be calculated in the following manner: W=user ID∥lcomponent ID∥C1∥C2.

In this implementation, the user ID, the component ID, the first transfer parameter, and the second transfer parameter are introduced in a process of calculating the intermediate parameter. The component ID may implement a function of uniquely identifying an ECU. Therefore, different intermediate parameters may be generated for different ECUs. In addition, the user ID may implement a function of uniquely identifying the terminal, so that the generated intermediate parameter corresponds to the terminal. Further, the first transfer parameter and the second transfer parameter are random and unpredictable. Therefore, the generated intermediate parameter is random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

In a feasible implementation, the user ID, the component ID, the vehicle ID, the first transfer parameter, and the second transfer parameter are connected to obtain the intermediate parameter.

In this implementation, the first interaction parameter set sent by the terminal may include {the curve parameters, the user ID, the component ID, P, and C1}.

In this implementation, the intermediate parameter may be calculated in the following manner: W=user ID∥component ID∥vehicle ID∥C1∥C2.

In this implementation, the user ID, the component ID, the vehicle ID, the first transfer parameter, and the second transfer parameter are introduced in a process of calculating the intermediate parameter. The component ID may implement a function of uniquely identifying an ECU. Therefore, different intermediate parameters may be generated for different ECUs. In addition, the user ID may implement a function of uniquely identifying the terminal, so that the generated intermediate parameter corresponds to the terminal. The vehicle ID may implement a function of uniquely identifying the vehicle, so that the generated intermediate parameter corresponds to the vehicle. Further, the first transfer parameter and the second transfer parameter are random and unpredictable. Therefore, the generated intermediate parameter is random and unpredictable. The first vehicle key obtained through calculation by using the intermediate parameter is random and unpredictable. In a process in which the terminal communicates with the vehicle by using the first vehicle key, a replay attack can be prevented, and communication security is relatively high.

It should be noted that this embodiment merely describes, by using examples, several implementations of calculating the intermediate parameter based on the identification parameter and/or the vehicle ID and/or the first transfer parameter and/or the second transfer parameter. The foregoing implementations do not constitute a limitation. In an actual application process, a parameter participating in calculation of the intermediate parameter may be flexibly selected based on a requirement, to implement a flexible encryption process.

Still referring to FIG. 9, to further improve security of communication between the terminal and the vehicle, based on the technical solutions provided in the foregoing embodiments, the KMS is further configured to perform the following steps.

In S92, the KMS encrypts the master key by using the intermediate parameter, to obtain an encryption key.

In this embodiment, the KMS may generate a 2-tuple, for example, (the intermediate parameter, the master key) or (the master key, the intermediate parameter), by using the intermediate parameter and the master key. In a process of generating the 2-tuple, the KMS may preset a location of each element in the 2-tuple.

Then, the 2-tuple is encrypted by using a key generation algorithm, to generate the encryption key. In this embodiment, a key length of the output encryption key and a format of the output key may be preset. For example, it may be determined that the key format is "JMKey:", and it is determined that the key length of the output encryption key is a 32-bit character string. In addition, the key generation algorithm of the encryption key may be a common key generation algorithm in a related technology. For example, the key generation algorithm may be a DES (Data Encryption Standard) algorithm, a KDF (Key Derivation Function, key derivation function) algorithm, an AEAD (Authenticated Encryption with Associated Data) algorithm, or the like.

In this embodiment, the KMS performs secondary encryption on the master key by using the intermediate parameter to obtain the encryption key. Because the intermediate parameter is random and unpredictable, it can be ensured that the obtained encryption key is random and unpredictable. Further, even if a communication process between the terminal and the vehicle is maliciously attacked, a key that is first attacked is the encryption key. Therefore, the encryption key protects the master key to some extent.

In S53, the KMS encrypts the shared key by using the ciphering parameter, to obtain a first vehicle key.

In this embodiment, a PSK (pre-shared key, shared key) is a randomly generated character string. The terminal and the KMS may determine, by judging whether the other party masters the same shared key, whether an identity of the other party is valid, that is, whether communication can be performed.

In this embodiment, the KMS may generate a multi-tuple, for example, (the master key, the shared key), (the encryption key, the shared key, the intermediate parameter), or (the shared key, the master key, the intermediate parameter) by using the ciphering parameter and the shared key. In a process of generating the multi-tuple, the KMS may preset a location of each element in the multi-tuple.

Then, the multi-tuple is encrypted by using the key generation algorithm, to generate a first vehicle encryption key. In this embodiment, a key length of the output first vehicle encryption key and a format of the output key may be preset. For example, it may be determined that the key format is "CARKey:", and it is determined that the key length of the output first vehicle key is a 32-bit character string. In addition, the key generation algorithm of the first vehicle encryption key may be a common key generation algorithm in a related technology. For example, the key generation algorithm may be a DES algorithm, a KDF algorithm, an AEAD algorithm, or the like.

In S54, the KMS sends a second interaction parameter set to the terminal.

In this embodiment, the second interaction parameter set includes at least the first vehicle key. In some feasible implementations, the second interaction parameter set further includes a second subset, the second subset includes at least one interaction parameter, and the interaction parameter is a parameter that participates in calculation of the ciphering parameter and that is not recorded in the terminal.

In this embodiment, if parameters that participate in calculation of the ciphering parameter are all recorded in the terminal, the second interaction parameter set sent by the KMS to the terminal includes only the first vehicle key. With reference to specific examples, the following describes an application scenario in which the second interaction parameter set sent by the KMS includes only the first vehicle key.

In a feasible embodiment, the first vehicle key may be denoted as C3, where C3=AEAD (MK, W∥PSK). MK=X∥HashtoPoint (PW), and W=user ID∥C1. In this embodiment, the ciphering parameters include MK and W. The parameters that participate in calculation of the ciphering parameters include: X, PW, the user ID, and C1. X, PW, the user ID, and C1 are all recorded in the terminal. Therefore, in this embodiment, the second interaction parameter set sent by the KMS to the terminal includes only the first vehicle key C3.

In a feasible embodiment, the first vehicle key may be denoted as C3, where C3=AEAD (K, W||PSK). K=KDF (MK, W), MK=X∥HashtoPoint (PW), and W=user ID∥component ID∥C1. In this embodiment, the ciphering parameters include K and W. The parameters that participate in calculation of the ciphering parameters include: X, PW, the user ID, the component ID, and C1. X, PW, the user ID, the component ID, and C1 are all recorded in the terminal. Therefore, in this embodiment, the second interaction parameter set sent by the KMS to the terminal includes only the first vehicle key C3.

It should be noted that this application merely describes, by using examples, two application scenarios in which the second interaction parameter set sent by the KMS includes only the first vehicle key. The foregoing application scenarios do not constitute a limitation. In an actual application process, the ciphering parameter may be flexibly configured based on a requirement. Correspondingly, a parameter included in the second interaction parameter set also needs to be adjusted based on the ciphering parameter.

In this embodiment, if some of parameters that participate in calculation of the ciphering parameter are not recorded in the terminal, the second interaction parameter set sent by the KMS to the terminal includes the first vehicle key and the second subset. With reference to specific examples, the following describes an application scenario in which the second interaction parameter set includes the first vehicle key and the second subset.

In a feasible embodiment, the first vehicle key may be denoted as C3, where C3=AEAD (MK, W||PSK), MK=X∥HashtoPoint (PW), and W=user ID||C1∥vehicle ID. In this embodiment, the ciphering parameters include MK and W, and the parameters that participate in calculation of the ciphering parameters include X, PW, the user ID, C1, and the vehicle ID. X, PW, the user ID, and C1 are recorded in the terminal, and the vehicle ID is not recorded in the terminal. Therefore, in this embodiment, the second interaction parameter set sent to the terminal includes the first vehicle key C3 and the second subset, and the second subset includes the vehicle ID.

In a feasible embodiment, the first vehicle key may be denoted as C3, where C3=AEAD (K, W||PSK). K=KDF (MK, W), MK=X∥HashtoPoint (PW), W=user ID∥component ID∥C1∥vehicle ID∥C2, and C2=HashtoPoint (PW)+Y. In this embodiment, the ciphering parameters include K and W, and the parameters that participate in calculation of the ciphering parameters include X, PW, the user ID, the component ID, C1, C2, and the vehicle ID. X, PW, the user ID, the component ID, and C1 are recorded in the terminal, and the vehicle ID and C2 are not recorded in the terminal. Therefore, in this embodiment, the second interaction parameter set sent to the terminal includes the first vehicle key C3 and the second subset, and the second subset includes the vehicle ID and C2.

It should be noted that this application merely describes, by using examples, two application scenarios in which the second interaction parameter set sent by the KMS includes the first vehicle key and the second subset. The foregoing application scenarios do not constitute a limitation. In an actual application process, the ciphering parameter may be flexibly configured based on a requirement. Correspondingly, a parameter included in the second interaction parameter set also needs to be adjusted based on the ciphering parameter.

The method for establishing secure vehicle communication provided in this embodiment is applicable to the KMS of the vehicle. The KMS may generate the ciphering parameter based on the parameter included in the first interaction parameter set sent by the terminal; then encrypt the shared key by using the ciphering parameter, to obtain the first vehicle key; and finally send the second interaction parameter set including the first vehicle key to the terminal, so that the terminal can decrypt the first vehicle key to obtain the shared key. In this way, the terminal and the KMS can perform encryption and/or integrity protection on sent data by using the shared key.

In addition, the method provided in this application may implement end-to-end secure data transmission. The data may include control flows and data flows. For example, the data may include data of a remote interaction feature, such as remote configuration, remote control, and remote diagnosis. The data may further include a face, a fingerprint, a password, a key, a certificate, and the like that are registered by an application terminal outside the vehicle with the vehicle; and the data may further include sound, a picture, an image, and data monitored by a sensor that are accessed by the terminal inside the vehicle.

Further, the method provided in this application is not bound to an underlying protocol, and may support a plurality of underlying protocols.

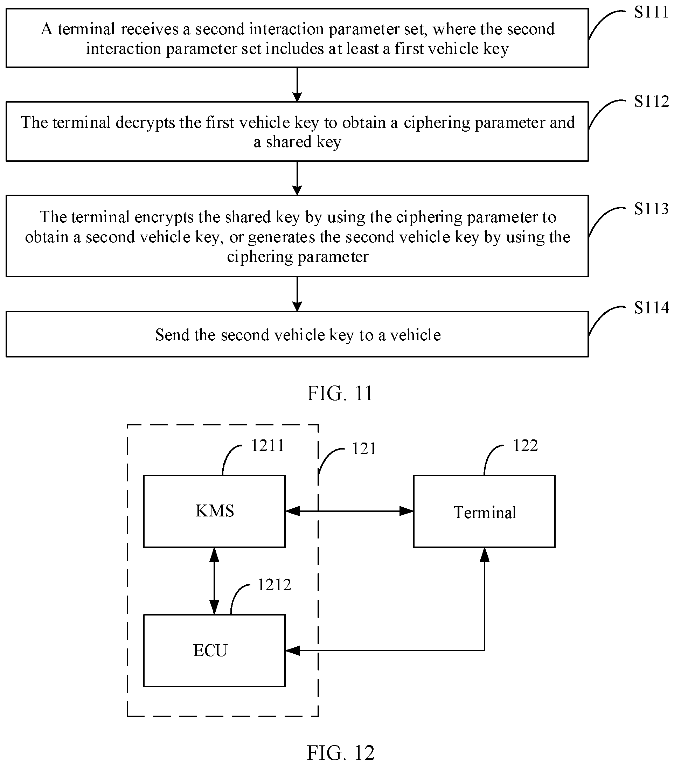

This embodiment further provides a method for establishing secure vehicle communication. The method is applicable to a terminal. With reference to FIG. 11, the following specifically explains a procedure of steps of establishing secure vehicle communication by a terminal according to an embodiment of this application.

In S111, the terminal receives a second interaction parameter set provided in this embodiment.

In this embodiment, the second interaction parameter set includes at least a first vehicle key. In some feasible implementations, the second interaction parameter set further includes a second subset, the second subset includes at least one interaction parameter, and the interaction parameter is a parameter that participates in calculation of the ciphering parameter and that is not recorded in the terminal.

In S112, the terminal decrypts the first vehicle key to obtain a ciphering parameter and a shared key.

In this embodiment, the ciphering parameter that participates in calculation of the first vehicle key is pre-stored in the terminal, or is included in the second interaction parameter set and sent by a KMS to the terminal. Therefore, after receiving the second interaction parameter set, the terminal may learn of all ciphering parameters that participate in calculation of the first vehicle key. The terminal may decrypt the first vehicle key to obtain the shared key. An implementation of decrypting the first vehicle key may be performed by using a decryption method in this field, and this is not limited herein.

In S113, the terminal encrypts the shared key by using the ciphering parameter to obtain a second vehicle key, or generates the second vehicle key by using the ciphering parameter.

A manner of generating the second vehicle key is described below.

In a feasible implementation, the terminal may generate the second vehicle key by using all the ciphering parameters. For example, in a feasible embodiment, the ciphering parameters that participate in generating the first vehicle key include a vehicle ID, C2, and C3, and the terminal may generate the second vehicle key by using the vehicle ID, C2, and C3. For example, the second vehicle key=AEAD (vehicle ID∥C2∥C3).

In a feasible implementation, the terminal may generate the second vehicle key by using some of the ciphering parameters. For example, in a feasible embodiment, the ciphering parameters that participate in generating the first vehicle key include a vehicle ID, C2, and C3, and the terminal may generate the second vehicle key by using the vehicle ID and C3. For example, the second vehicle key=AEAD (vehicle ID∥C3).

In a feasible implementation, the terminal may generate the second vehicle key by using the shared key and all the ciphering parameters. For example, in a feasible embodiment, the ciphering parameters that participate in generating the first vehicle key include a vehicle ID, C2, and C3, and the terminal may generate the second vehicle key by using the vehicle ID, C2, C3, and the shared key. For example, the second vehicle key=AEAD (vehicle ID∥C2∥C3∥shared key).

In a feasible implementation, the terminal may generate the second vehicle key by using the shared key and some of the ciphering parameters. For example, in a feasible embodiment, the ciphering parameters that participate in generating the first vehicle key include a vehicle ID, C2, and C3, and the terminal may generate the second vehicle key by using the vehicle ID, C3, and the shared key. For example, the second vehicle key=AEAD (vehicle ID∥C3∥shared key).

This application merely describes, by using examples, several manners of generating the second vehicle key, and the foregoing generation manners do not constitute a limitation. In an actual application process, the parameter that participates in generating the second vehicle key may be flexibly selected based on a requirement.

In S114, the second vehicle key is sent to the vehicle.

The method for establishing secure vehicle communication provided in this embodiment is applicable to the terminal. The terminal may decrypt the first vehicle key sent by the vehicle, to obtain the ciphering parameter and the shared key; then encrypt the shared key by using the ciphering parameter, to obtain the second vehicle key, and finally send the second vehicle key to the vehicle, so that the vehicle can decrypt the second vehicle key by using the ciphering parameter stored in the vehicle, to obtain the shared key and/or the ciphering parameter. The vehicle may compare the shared key and/or the ciphering parameter obtained by decrypting the second vehicle key with the shared key and/or the ciphering parameter stored in the vehicle. If the two are consistent, decryption succeeds. When the decryption succeeds, the terminal and the vehicle may perform encryption and/or integrity protection on the sent data by using the shared key.

This embodiment provides a system for establishing secure vehicle communication. Refer to FIG. 12 for details. FIG. 12 is a structural block diagram of a system for establishing secure vehicle communication according to this embodiment. The system includes a vehicle 121 and a terminal 122.

The vehicle 121 includes a KMS 1211 and an ECU 1212. The KMS 1211 is configured to perform the method provided in FIG. 5 to FIG. 10, and the ECU 1212 is configured to perform secure communication with the terminal by using a shared key sent by the KMS 1211. The terminal is configured to perform the method provided in FIG. 11.

An embodiment of this application provides a secure communication system, including:
a first application installed on a vehicle end, where the first application is configured to implement the method provided in FIG. 5 to FIG. 10 when executing instructions; and
a second application installed on a terminal, where the second application is configured to implement the method provided in FIG. 11 when executing instructions.

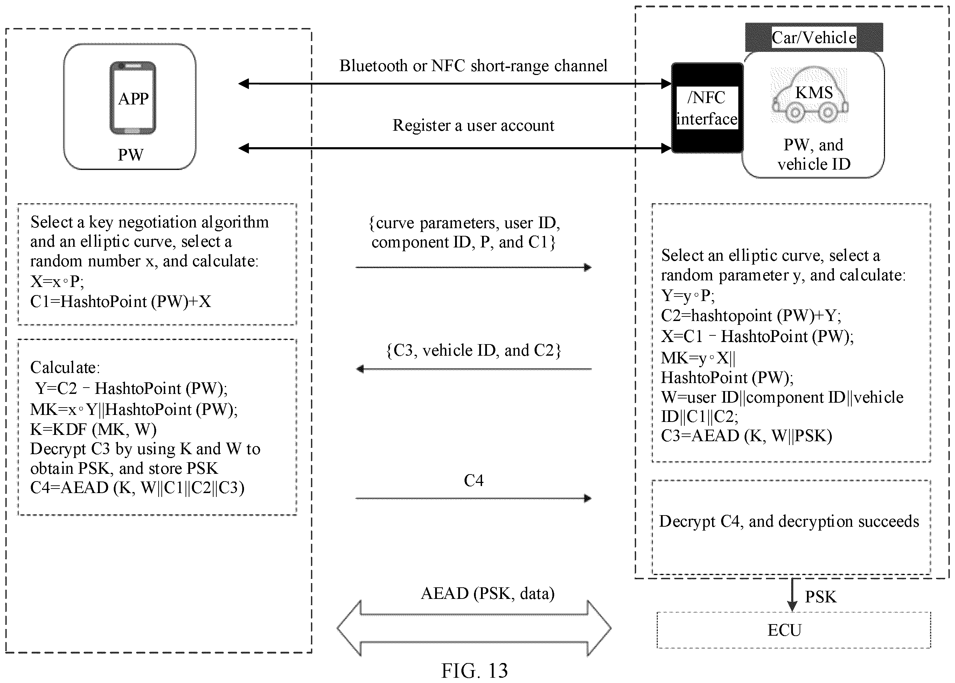

The following describes an operation process of the foregoing system with reference to a specific accompanying drawing. FIG. 13 is a flowchart of interaction between a terminal and a vehicle according to a feasible embodiment. It can be learned that:

In this embodiment, the terminal selects a key agreement algorithm and an elliptic curve. When the elliptic curve is selected, curve parameters of the elliptic curve are determined. A random number x is selected, and a base point P is selected on the elliptic curve. The terminal calculates a first elliptic parameter X according to the following formula: X=x∘P, and calculates a first transfer parameter C1 according to the following formula: C1=HashtoPoint (PW)+X. Then, the terminal sends a first interaction parameter set to a KMS. In this embodiment, the first parameter set includes {the curve parameters, a user ID, a component ID, P, and C1}.

The KMS receives the first interaction parameter set, selects the elliptic curve based on the curve parameters, and selects a random parameter y. The KMS calculates a fourth elliptic parameter Y according to the following formula: Y=y∘P; calculates a second transfer parameter C2 according to the following formula: C2=HashtoPoint (PW)+Y; calculates the first elliptic parameter X according to the following formula: X=C1-HashtoPoint (PW); calculates a master key MK according to the following formula: MK=y∘X∥HashtoPoint (PW); calculates an intermediate parameter W according to the following formula: W=user ID∥component ID∥lvehicle ID∥C1∥C2; calculates an encryption key K according to the following formula: K=KDF (MK, W); and calculates a first vehicle key C3 according to the following formula: C3=AEAD (K, W∥PSK). The KMS sends a second interaction parameter set to the terminal. In this embodiment, the second interaction parameter set includes {C3, the vehicle ID, and C2}.

The terminal receives the second interaction parameter set, and calculates the fourth elliptic parameter Y according to the following formula: Y=C2-HashtoPoint (PW); calculates the master key MK according to the following formula: MK=x∘Y∥HashtoPoint (PW); calculates an intermediate parameter W according to the following formula: W=user ID∥component ID∥vehicle ID∥C1∥C2; calculates the encryption key K according to the following formula: K=KDF (MK, W); and then the terminal decrypts C3 by using K and W to obtain PSK, and stores PSK. Then, the terminal encrypts PSK by using the following formula to obtain a second vehicle key C4: C4=AEAD (K, W∥C1∥C2∥C3). Finally, the terminal sends C4 to the KMS.

The KMS receives C4 and decrypts C4. If decryption succeeds, the KMS sends PSK to an ECU, so that the terminal and the ECU can perform encryption and/or integrity protection on sent data by using PSK.

An embodiment of this application provides a computer program product, including computer-readable code or a non-volatile computer-readable storage medium carrying computer-readable code. When the computer-readable code is run in a processor of an electronic device, the processor in the electronic device performs the foregoing method.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory, a read-only memory, an erasable programmable read-only memory, a static random access memory, a portable compact disc read-only memory, a digital video disc, a memory stick, a floppy disk, a mechanical coding device, for example, a punch card or a convex structure in a groove that stores instructions, and any suitable combination thereof.

The computer-readable program instructions or code described herein may be downloaded from the computer-readable storage medium to each computing/processing device or to an external computer or external storage device by using a network such as the Internet, a local area network, a wide area network, and/or a wireless network. The network may include a copper transmission cable, optical fiber transmission, wireless transmission, a router, a firewall, a switch, a gateway computer and/or an edge server. A network adapter card or a network interface in each computing/processing device receives the computer-readable program instructions from the network, and forwards the computer-readable program instructions for storage into the computer-readable storage medium in each computing/processing device.

The computer program instruction used to perform an operation in this application may be an assembly instruction, an instruction set architecture instruction, a machine instruction, a machine-related instruction, microcode, a firmware instruction, status setting data, or source code or target code written in any combination of one or more programming languages. The programming languages include an object-oriented programming language such as Smalltalk or C++, and a conventional procedural programming language such as a "C" language or a similar programming language. The program-readable program instructions may be executed completely on the user computer, partially on the user computer, as an independent software package, partially on the user computer, partially on the remote computer, or completely on the remote computer or server. In a case involving a remote computer, the remote computer may be connected to the user computer by using any type of network, including a LAN (Local Area Network, local area network) or a WAN (Wide Area Network, wide area network), or may be connected to an external computer (for example, using an Internet service provider to connect via the Internet). In some embodiments, an electronic circuit, for example, a programmable logic circuit, an FPGA (Field-Programmable Gate Array, field-programmable gate array), or a PLA (Programmable Logic Array, programmable logic array), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to this embodiment. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable the computer, the programmable data processing apparatus, and/or another device to work in a specific manner. Therefore, the computer-readable medium storing the instructions includes an artifact that includes instructions for implementing the various aspects of the functions/actions specified in the one or more blocks in the flowcharts and/or the block diagrams.

The computer-readable program instructions may alternatively be loaded onto the computer, the another programmable data processing apparatus, or the another device, so that a series of operation steps is performed on the computer, the another programmable data processing apparatus, or the another device to produce a computer-implemented process. Therefore, the instructions executed on the computer, the another programmable data processing apparatus, or the another device implements the functions/actions specified in the one or more blocks in the flowcharts and/or block diagrams.

The flowcharts and block diagrams in the accompanying drawings show the system architectures, functions, and operations that may be implemented by apparatuses, systems, methods, and computer program products according to various embodiments of this application. In this regard, each block in the flowcharts or block diagrams may represent a module, a program segment, or a part of an instruction, and the module, the program segment, or the part of the instruction includes one or more executable instructions for implementing a specified logical function. In some alternative implementations, functions marked in the blocks may also occur in a sequence different from that marked in the accompanying drawings. For example, two consecutive blocks may be actually executed substantially in parallel, or sometimes may be executed in a reverse order, depending on a function involved.

It should also be noted that each block in the block diagrams and/or the flowcharts, and a combination of blocks in the block diagrams and/or the flowcharts may be implemented by hardware (for example, a circuit or an ASIC (Application Specific Integrated Circuit, application specific integrated circuit)) that performs a corresponding function or action, or may be implemented by a combination of hardware and software, for example, firmware.

Although the present invention is described herein with reference to the embodiments, in a process of implementing the present invention that seeks protection, a person skilled in the art may understand and implement other variations of the disclosed embodiments by viewing the accompanying drawings, disclosed content, and the appended claims. In the claims, the word "comprising" does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce a good effect.

The foregoing has described the embodiments of this application. The foregoing descriptions are examples, are not exhaustive, and are not limited to the disclosed embodiments. Many modifications and variations are apparent to a person of ordinary skill in the art without departing from the scope and spirit of the described embodiments. Selection of terms used in this specification is intended to best explain the principles of the embodiments, actual application, or improvements to technologies in the market, or to enable another person of ordinary skill in the art to understand the embodiments disclosed in this specification.

## Claims

1. A method for establishing secure vehicle communication, wherein the method is applicable to a vehicle and comprises:
receiving a first interaction parameter set, wherein the first interaction parameter set is a set comprising a parameter sent by a terminal to the vehicle when the terminal requests to perform data exchange with the vehicle;
generating a ciphering parameter set based on the parameter comprised in the first interaction parameter set, wherein the ciphering parameter set comprises at least one ciphering parameter;
encrypting a shared key by using the ciphering parameter, to obtain a first vehicle key, wherein the shared key is a randomly generated character string; and
sending a second interaction parameter set to the terminal, wherein the second interaction parameter set comprises at least the first vehicle key.

2. The method according to claim 1, wherein the first interaction parameter set comprises curve parameters, a base point, and a first transfer parameter, wherein
the curve parameters are parameters used to uniquely determine an elliptic curve; and
the first transfer parameter is a parameter obtained by hashing a user password onto the elliptic curve and then performing point addition calculation on an elliptic parameter obtained by hashing the user password onto the elliptic curve and a first elliptic parameter, wherein the first elliptic parameter is a coordinate value of any point on the elliptic curve.

3. The method according to claim 2, wherein the first interaction parameter set further comprises a first subset, the first subset comprises at least one identification parameter, and the identification parameter comprises a user ID and/or a component ID.

4. The method according to any one of claims 1 to 3, wherein the second interaction parameter set further comprises a second subset, the second subset comprises at least one interaction parameter, and the interaction parameter is a parameter that participates in calculation of the ciphering parameter and that is not recorded in the terminal.

5. The method according to any one of claims 2 to 4, wherein the step of generating a ciphering parameter set based on the parameter comprised in the first interaction parameter set comprises:
performing point subtraction calculation on the first transfer parameter and the second elliptic parameter to obtain the first elliptic parameter; and
connecting the first elliptic parameter and the second elliptic parameter to obtain a master key, wherein the second elliptic parameter is an elliptic parameter obtained by hashing the user password onto the elliptic curve, the user password is pre-stored in the vehicle, and the elliptic curve is a curve selected based on the curve parameters.

6. The method according to any one of claims 2 to 4, wherein the step of generating a ciphering parameter set based on the parameter comprised in the first interaction parameter set comprises:
performing point subtraction calculation on the first transfer parameter and a second elliptic parameter to obtain the first elliptic parameter, wherein the second elliptic parameter is an elliptic parameter obtained by hashing the user password onto the elliptic curve, the user password is pre-stored in the vehicle, and the elliptic curve is a curve selected based on the curve parameters;
performing multiplication calculation on the first elliptic parameter and a random parameter to obtain a third elliptic parameter, wherein the random parameter is a randomly generated parameter; and
connecting the third elliptic parameter and the second elliptic parameter to obtain a master key.

7. The method according to claim 5 or 6, wherein the step of generating a ciphering parameter set based on the parameter comprised in the first interaction parameter set further comprises:
calculating an intermediate parameter based on the identification parameter and/or the vehicle ID and/or the first transfer parameter and/or a second transfer parameter, wherein the vehicle ID is pre-stored in the vehicle, and the second transfer parameter is a parameter calculated based on the parameter in the first interaction parameter set.

8. The method according to claim 7, wherein a process of calculating the second transfer parameter is:
selecting the elliptic curve based on the curve parameters;
hashing the user password onto the elliptic curve to obtain the second elliptic parameter; and
performing point addition calculation on the second elliptic parameter and a fourth elliptic parameter to obtain the second transfer parameter, wherein the fourth elliptic parameter is a coordinate value corresponding to any point on the elliptic curve.

9. The method according to claim 7 or 8, wherein the step of generating a ciphering parameter set based on the parameter comprised in the first interaction parameter set further comprises:
encrypting the master key by using the intermediate parameter to obtain an encryption key.

10. The method according to any one of claims 7 to 9, wherein the step of calculating an intermediate parameter based on the identification parameter and/or the vehicle ID and/or the first transfer parameter and/or the second transfer parameter is specifically:
connecting the user ID and the component ID to obtain the intermediate parameter.

11. The method according to any one of claims 7 to 9, wherein the step of calculating an intermediate parameter based on the identification parameter and/or the vehicle ID and/or the first transfer parameter and/or the second transfer parameter is specifically:
connecting the user ID, the component ID, and the first transfer parameter to obtain the intermediate parameter.

12. The method according to any one of claims 7 to 9, wherein the step of calculating an intermediate parameter based on the identification parameter and/or the vehicle ID and/or the first transfer parameter and/or the second transfer parameter is specifically:
connecting the user ID, the component ID, the first transfer parameter, and the second transfer parameter to obtain the intermediate parameter.

13. The method according to any one of claims 7 to 9, wherein the step of calculating an intermediate parameter based on the identification parameter and/or the vehicle ID and/or the first transfer parameter and/or the second transfer parameter is specifically:
connecting the user ID, the component ID, the vehicle ID, the first transfer parameter, and the second transfer parameter to obtain the intermediate parameter.

14. The method according to any one of claims 7 to 9, wherein the step of calculating an intermediate parameter based on the identification parameter and/or the vehicle ID and/or the first transfer parameter and/or the second transfer parameter is specifically:
connecting the vehicle ID and the second transfer parameter to obtain the intermediate parameter.

15. A method for establishing secure vehicle communication, wherein the method is applicable to a terminal and comprises:
receiving a second interaction parameter set, wherein the second interaction parameter set comprises at least the first vehicle key;
decrypting the first vehicle key to obtain a ciphering parameter and a shared key;
encrypting the shared key by using the ciphering parameter, to obtain a second vehicle key, or generating the second vehicle key by using the ciphering parameter; and
sending the second vehicle key to the vehicle.

16. A vehicle, comprising a key management system, wherein the key management system comprises:
a processor and a memory configured to store executable instructions of the processor, wherein
the processor is configured to implement the method according to any one of claims 1 to 14 when executing the instructions.

17. A terminal, comprising:
a processor and a memory configured to store executable instructions of the processor, wherein
the processor is configured to implement the method according to claim 16 when executing the instructions.

18. A secure communication system, comprising:
a vehicle, wherein the vehicle is configured to implement the method according to any one of claims 1 to 14 when executing instructions; and
a terminal, wherein the terminal is configured to implement the method according to claim 15 when executing instructions.

19. A non-volatile computer-readable storage medium, storing a computer program instruction, wherein when the computer program instruction is executed by a processor, the method according to any one of claims 1 to 14 or the method according to claim 15 is implemented.

20. A computer program product, wherein when the computer program product runs on a computer, the computer is enabled to perform the method according to any one of claims 1 to 14, or perform the method according to claim 15.
